# EUROPEAN PATENT APPLICATION

(11) **EP 3 620 413 A1**
(43) Date of publication of application: **11.03.2020**
(21) Application number: 19194255.6
(22) Date of filing: 29.08.2019
(51) Int. Cl.: B65G 47/84

(54) **DEVICE, SYSTEM AND METHOD FOR SORTING PRODUCTS**

(30) Priority: 10.09.2018 NL 2021590
(71) Applicant: Vanderlande Industries B.V., 5466 RB Veghel (NL)
(72) Inventor: VAN TOOR, Fred, 5466 RB VEGHEL (NL); VERVOORT, Petrus Theodorus Cornelis, 5466 RB VEGHEL (NL)
(74) Representative: Algemeen Octrooi- en Merkenbureau B.V.

(57) **Abstract**

The invention relates to a device, system and method for sorting products, said device comprising a frame, elongated carriers, pusher members that are movable along the carriers, guiding means substantially oblique relative to the conveying direction, and a change-over device (34) with a change-over member (56) that is reversible between a passive and an active state for allowing, in the passive state, a guide member (46) of a pusher member to pass along the upstream end of the guiding member and, in the active state, for moving the guide member (46) of the pusher member in the longitudinal direction of the associated carrier under the effect of contact between a contact surface (58) of the change-over member (56) and the guide member (46) of the pusher member. The change-over member (56) comprises at least three successive change-over elements (57a-57f) each defining a successive part (58a-58f) of the contact surface (58), and comprising a displacing device for moving each of the at least three change-over elements (57a-57f) between a passive and an active position thereof.

## Description

The present invention relates to a device, a system and a method for sorting products.

WO 2007/117142 A2, EP 484 151 A1 and WO 2011/025732 A1 each disclose a transport device for objects, comprising a frame with a number of carriers that interact with pusher shoes that are movable sideways.

US 2007/102261 A1 relates to a transfer system used for transferring articles that are conveyed on a main conveying path to branching conveying paths.

One aim of the present invention is to provide an improved sorting device, system and method. A further aim of the present invention is to provide a sorting device that makes it possible to sort products at high speed. Yet another aim of the present invention is to provide a sorting device that makes it possible to sort products more efficiently.

One or more of said aims are achieved with the device according to the invention, as defined in claim 1, for sorting products, said device comprising
- a frame,
- successive elongated carriers that form a carrying surface for products,
- a drive device for conveying the carriers in a conveying direction and along an endless conveying path, wherein a longitudinal direction of the carriers extends transversely to the conveying direction, in a transverse direction,
- pusher members, each movable along a carrier, each of the pusher members comprising a pusher shoe on a first side of the carrier located on the carrying surface, and a guide member connected to the pusher shoe on an opposite second side of the carrier,
- guiding means that are provided on the frame, comprising a stationary guiding member connected to the frame that runs substantially obliquely relative to the conveying direction, for guiding the guide member of a pusher member in operation, during transport of the carriers in the conveying direction, so as to move the pusher member in the longitudinal direction of the associated carrier, for the purpose of moving a product located on the carrying surface sideways off of the carrying surface at a discharge location,
- a reversible change-over device, which is provided on the frame at an upstream end of the guiding member and comprising a change-over member that is reversible between a passive and an active state thereof and is configured for allowing a pusher member to pass in the passive state along the upstream end of the guiding member and for moving the pusher member in the longitudinal direction of the associated carrier in the active state, under the effect of contact between a contact surface of the change-over member and the guide member of a pusher member, so that the guide member is then guided by the guiding member,
wherein the change-over member comprises at least three successive change-over elements, each defining a successive, i.e. seen in the conveying direction, part of the contact surface, the guide member being, in operation, at least in the active state of the change-over member, successively in contact with said change-over elements, wherein the change-over device also has a displacing device for moving, such as after one another, each of the at least three change-over elements between a passive and an active position thereof, wherein in the passive position the respective change-over element is outside the range of the guide member, and wherein in the active state of the change-over member at least one of the at least three change-over elements is in the active position thereof.

One effect of the device according to the invention is that it is possible to sort products at a higher speed by means of the change-over member with the at least three successive change-over elements. By increasing the speed of movement of the carriers, and therefore of the pusher members, in the conveying direction, the required switching time of the change-over device, i.e. the available reversing time of the change-over member between the active and the passive state thereof, becomes shorter. A shorter switching time has the result that more energy is required to perform reversal of the change-over member, which is undesirable from the viewpoint of efficiency. This can be satisfied effectively with the device according to the invention because the at least three change-over elements of a change-over member can each be reversed one after another, so that the switching time per change-over element can thus be longer. Less energy is thus required for reversal.

A further effect of the device according to the invention is that products can be sorted more efficiently for example because the transverse accelerations acting on a product to be sorted can be limited. Because the at least three change-over elements of a change-over member can be reversed one after another, a total length of the contact surface of the change-over member can be selected that is longer than the pitch between the carriers, i.e. the clearance between two guide elements of directly successive pusher members. Therefore deflection of a guide member towards the stationary guiding member can take place more gradually, i.e. with a lower transverse acceleration. This also results in less production of noise and less wear of components of the device, in particular of the change-over member and guide member.

The device according to the invention is also particularly suitable for being in contact, with the change-over member in operation, with a guide wheel of the guide member of the pusher member, instead of the customary contact between a change-over member and a guide pin of a pusher member. Contact between the change-over member and guide wheel results in a decrease in wear and resistance (rolling resistance with contact between guide wheel and change-over member in place of sliding resistance in the case of contact between guide pin and change-over member). Although the clearance between the guide wheels of two directly successive pusher members is considerably less than the clearance between guide pins, on account of the larger diameter of said guide wheels (than of guide pins), this does not have a negative effect on the available maximum switching time, since, as already explained above, according to the invention the change-over member has at least three successive change-over elements, which can be reversed one after another between the passive and the active state thereof.

'One after another' means, in the context of the invention, that the start of the motion of the change-over elements for the purpose of reversal thereof can take place one after another. In this context it is possible that the execution of reversal one after another takes place with a certain overlap, i.e. while a first element is being reversed, i.e. is being moved to the active or passive position, reversing of a second change-over element is started. In other words the reversing operations of the individual change-over elements thus overlap. Completely separate execution of reversal one after another is also possible in this context, which will mean that reversing of a second, successive, change-over element from the active position to the passive position only begins after a first change-over element has been reversed - completely - for example from the active to the passive position.

In one embodiment the at least three change-over elements are a number of change-over elements in the range from three to eight inclusive, preferably four, five or six.

Preferably the guide member of each pusher member has a guide wheel that is rotatable about a rotation axis, wherein each of the at least three change-over elements is configured so that in operation, in the active position thereof, it can be in contact with the guide wheel. The rotation axis extends in the height direction and is preferably directed perpendicular to the carrying surface, and therefore to the conveying direction.

It is advantageous if the displacing device is configured to move each of the at least three change-over elements of a change-over member, preferably linearly, between the active and the passive position thereof, preferably wherein the passive position is lower than the active position. "Height direction" means a direction perpendicular to the carrying surface, wherein the carrying surface usually extends horizontally. Since in operation forces exerted by the guide member on the change-over member act in the transverse direction, a force required for said movement is not or at least to a large extent is disconnected from said forces exerted by the change-over member.

It is also advantageous if the change-over device is configured so that in operation in the passive position of the respective at least three change-over elements the guide wheel moves over the respective at least three change-over elements.

Preferably the displacing device is configured to move each of the at least three change-over elements of a change-over member, independently of the rest of the at least three change-over elements, between the active and the passive position thereof. This results in increased flexibility of the change-over device with respect to reversal of the change-over elements.

In one embodiment, each of the at least three change-over elements is mounted slidably in the change-over device in a displacement direction relative to a rigid portion of the change-over device.

It is also advantageous if each of the at least three change-over elements in mounted in the change-over device movably in a displacement direction, wherein the displacement direction is in the height direction and makes an angle with the carrying surface in the range from 70 to 90 degrees inclusive, preferably in the range from 80 to 85 degrees inclusive. The change-over elements are thus provided inclined slightly forwards or backwards, preferably slightly forwards. As a result, production of noise and wear is less with the change-over elements being successively in contact with the guide members of pusher members.

It is advantageous if each of the change-over elements, viewed in a displacement direction thereof, has a polygonal, preferably quadrangular, cross-section.

It is also advantageous if each of the at least three change-over elements, on a side opposite the contact surface, rests on a supporting surface belonging to the rigid portion of the change-over device, and on a front and back side thereof seen in the conveying direction rests slidably against an adjacent one of the at least three change-over elements and/or a further supporting surface belonging to the rigid portion of the change-over device. Said support may be direct, i.e. for example by means of a sliding contact between the change-over element and the supporting surface or adjacent change-over element. It is in this case for example also possible to provide a rib-groove joint wherein the rib can slide through the groove in the displacement direction, for guiding the change-over element effectively in the displacement direction. Said support may alternatively be indirect, i.e. for example via a bearing provided between the change-over element and supporting surface or adjacent change-over element such as a sliding bearing or linear guide such as a ball guide.

In one embodiment the displacing device has, per change-over element of the at least three change-over elements, an electric motor, such as a servomotor or stepping motor, with a drive shaft that is coupled to the change-over element via a cam follower for moving the change-over element between the active and the passive position thereof under the effect of rotation of the drive shaft. By this means, the change-over elements can be moved very effectively and accurately, independently of each other. Alternatively, the displacing device may for example have pneumatic or hydraulic cylinder drives or spindle drives for the movement between the active and the passive position thereof of each of the change-over elements of a change-over member.

It is also advantageous if the successive carriers are provided at a mutual pitch, wherein a length of the contact surface of the change-over member, seen in the conveying direction, is greater than the pitch. As explained in the foregoing, by this means, among other things, deflection of a guide member towards the stationary guiding member can take place more gradually, i.e. with a lower transverse acceleration.

Preferably the contact surface has a continuously curved form. There is then no question of a jump in the transverse acceleration of the pusher member during passage of the change-over member in the active state of the change-over device. Preferably at least two of the at least three change-over elements have a mutually different curvature, in combination forming at least a part of the continuously curved form of the contact surface.

It is also advantageous in this regard if a change-over element, downstream when viewed in the conveying direction, is more curved than the adjacent change-over element located upstream thereof of the at least three change-over elements, more preferably wherein a further downstream change-over element seen in the conveying direction of the at least three change-over elements is less curved than said downstream change-over element. A change-over element that for example has a relatively smaller radius (of curvature) is 'more curved'. Similarly, a change-over element with a larger radius is 'less curved'.

Preferably, the contact surface of the change-over member changes, preferably continuously, optional via a further guide with a rectilinear, i.e. non-curved form, into a guiding surface of the stationary guiding member.

In one embodiment, the change-over device has a longitudinal guide for guiding the guide member in the conveying direction, wherein the stationary guiding member is, at the location of the change-over member, a branching from the longitudinal guide.

It is also advantageous if the successive carriers are provided at a mutual pitch, the device comprising a number of said reversible change-over devices, in each case at an upstream end of associated stationary guiding means, i.e. at an upstream end of the stationary guiding member of the guiding means, and in each case at a mutual distance in the conveying direction of at least twice the pitch. The guide members of the successive pusher members are therefore also provided at the mutual pitch. A length of the contact surface of the change-over member, seen in the conveying direction, is preferably greater than the pitch, preferably in the range of 1.5-5 times the pitch.

In one embodiment the drive device comprises an infinitely, drivable, flexible conveying member, such as a chain, wherein the successive carriers are coupled to the conveying member.

The present invention also relates to a system for sorting products, as defined in claim 12, the system comprising
- a device described above according to the present invention,
- a feeding device for feeding a stream of products to be sorted onto the carrying surface of the device,
- a number of discharge devices that connect to the device at respective discharge locations,
the device comprising, per discharge location, stationary guiding means with an associated reversible change-over device,
wherein in operation, products fed via the feeding device onto the carrying surface are each moved off of the carrying surface at a discharge location, making use of the change-over device associated with said discharge location.

The present invention also relates to a method for sorting products, as defined in claim 13, making use of a device described above according to the present invention, the method comprising
a) feeding a stream of products to be sorted onto the carrying surface of the device with a feeding device,
b) conveying the carriers in the conveying direction with the drive device of the device,
c) for the purpose of moving a product of the stream of products located on the carrying surface at a discharge location sideways off of the carrying surface, to a discharge device,
   moving the pusher member, with the reversible change-over device, in the active state of the change-over member thereof, under the effect of contact between a contact surface of the change-over member and the guide member of the pusher member, in the longitudinal direction of the associated carrier, so that the guide member is then guided by the stationary guiding member and the pusher member is displaced in the longitudinal direction of the associated carrier, so that the product is moved sideways off of the carrying surface,
d) discharging the product with the associated discharge device at said discharge location.

Embodiments of the device according to the invention as described above and to be described below are similarly applicable to the system and the method according to the invention, and vice versa. Effects of the device according to the invention are similarly applicable for the system and the method according to the invention, and vice versa.

In one embodiment of the method, for the purpose of step c) with the reversible change-over device:
first the most upstream change-over element of the at least three change-over elements of the change-over member is brought into the active position thereof,
after which, successively, the at least two more downstream change-over elements of the at least three change-over elements of the change-over member are brought into the active position thereof.

The guide member of the pusher member then comes successively into contact with the most upstream change-over element and then successively with the more downstream change-over elements of the change-over member.

It is also advantageous if after the guide member has passed a change-over element of the at least three change-over elements of a change-over member, said change-over element is returned to or at least towards the passive position thereof before the guide member has passed the most downstream change-over element of said three change-over elements,
unless the guide member of the upstream adjacent pusher member also has to be moved in the longitudinal direction of the associated carrier of the pusher member under the effect of contact between a contact surface of the change-over member and the guide member of the pusher member.

The present invention is explained hereunder on the basis of the description of a preferred embodiment example of a device according to the present invention, referring to the following schematic figures, in which:
- Fig. 1 shows a top view of a part of a system with a device according to the present invention,
- Fig. 2 shows section II-II according to Fig. 1,
- Figs. 3a-3f show a three-dimensional representation of a preferred embodiment of a change-over device of a device according to the present invention, during a number of successive steps that are carried out in operation of the device during sorting of a product,
- Figs. 3g and 3h show a three-dimensional representation of an underside of the change-over device according to Fig. 3b and Fig. 3e respectively.

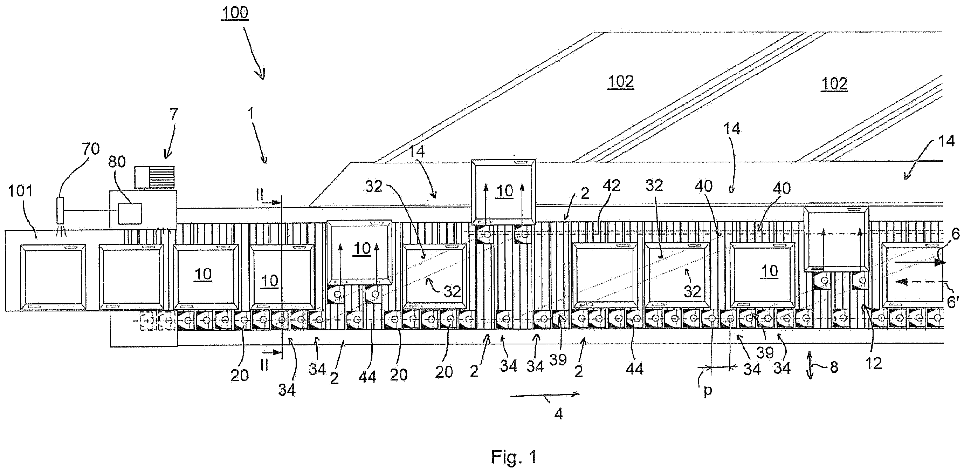

Fig. 1 shows a sorting device 1 as a preferred embodiment example of a device according to the present invention. The device 1 has successive elongated carriers 2 (only some of the carriers shown in Fig. 1 are provided with a reference number) which in operation of the device 1 are conveyed in a conveying direction 4 along an endless conveying path 6. The carriers 2 extend with their longitudinal direction transversely to the conveying direction 4, or in a transverse direction 8. The carriers 2 form a carrying surface 12 for products 10, at least on the upper side (as will be explained in more detail below) of the device.

The device 1 forms part of a system 100 for sorting products 10. The system 100 additionally has a feeding device 101 for feeding a stream of products 10 to be sorted onto the carrying surface 12 of the device 1, and a number of discharge devices 102, which connect to the device 1 at respective discharge locations 14. With the device 1, products 10, for example parcels to be sent, can be sorted such as on the basis of assignment or shipping destination, for which each of the discharge devices 102 for example may be assigned to a specific assignment or shipping destination. The feeding device 101 may comprise a conveyor. Alternatively, the feeding device may be for example a supply station, at which products are placed manually on the device 1. The discharge device 102 may comprise a chute or slide, or for example a conveyor, on which products end up as they are moved off of the carrying surface 12, as will be explained in detail hereunder.

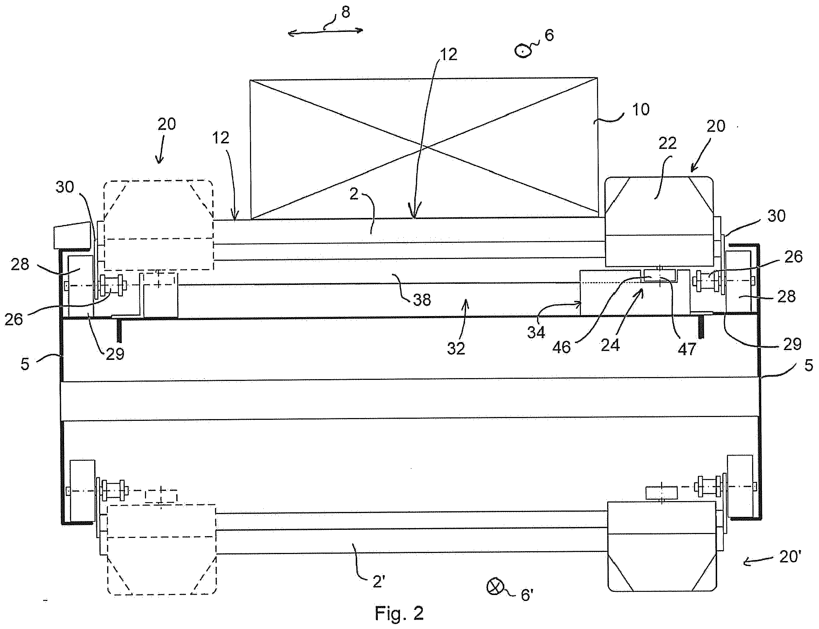

The carriers 2 are joined together via coupling plates 30 (see Fig. 2) by a transport chain 26. The carriers 2 are spaced at a pitch p. The carriers 2 can move, i.e. be conveyed, in an endless path. On an upper side, or at least a higher side, of the device 1, where the carriers form the carrying surface 12, the carriers 2 move in the conveying direction 4, after which, at a downstream end of the device 1, where a sprocket wheel is provided for the transport chain (not shown in the figures), they move downwards round the sprocket wheel and then move in against the conveying direction on a lower side of the device 1 (carrier 2' in Fig. 2). This backward part of the conveying path is indicated with the dashed arrow 6' in Fig. 1. At an upstream end of the device 1, where the feeding device 101 joins the device 1, the carriers 2 move round a sprocket wheel provided there (not shown in the figures) upwards, after which the carriers again move in the conveying direction 4 in order to convey products 10, on the carrying surface 12, from the upstream end towards the downstream end. The device 1 has a drive device 7 (only shown very schematically in Fig. 1) for driving the carriers 2 in such a way that, at least on the upper side of the device where the carriers 2 form the carrying surface 12, they move in the conveying direction 4. The drive device 7 may comprise a drive motor for rotating for example one or both said sprocket wheels and/or additional sprocket wheels. The device has a frame 5 with a running surface 29 over which runners 28 roll along, which are connected to the carriers 2, more specifically to the coupling brackets 30.

The device 1 has pusher members 20, each of which is movable along a carrier 2. In Fig. 1, some of the pusher members shown have been given a reference number. Each of the pusher members 20 comprises a pusher shoe 22 on a first, upper side, of the carrier 2 located on the carrying surface 12, and a guide member connected to the pusher shoe 24, on an opposite, second underside of the carrier 2. The pusher shoes 22 project, as shown in Fig. 2, above the carrying surface 12 and can thus be used for moving a product 10 in the transverse direction over the carrying surface 12, i.e. to push aside, for sorting the product 10 at a discharge location 14 towards a discharge device. In the view shown in Fig. 2, a product 10 can be moved, with the pusher shoe 22 shown, towards the left over the carrying surface 12.

The device 1 has, per discharge location 14, guiding means 32 with an associated reversible change-over device 34, wherein in operation, products 10 fed via the feeding device 101 onto the carrying surface 12 can each be moved at a discharge location 14, off of the carrying surface, making use of a respective change-over device 34 at said discharge location. Three successive discharge locations 14 are shown in the figures. A pair of guiding means 32 each with an associated change-over device 34 is provided for each of these. This allows products 10 to be sorted in parallel towards a discharge device 102. This means that the orientation of the product may remain identical to the orientation in which the product lies on the carrying surface 12, as shown in Fig. 1. This is because a product, at least in the example shown, is moved in the transverse direction simultaneously with two pusher members 20. In the context of the invention it is also possible to provide a single, or more than two, guiding means and associated change-over device(s) per discharge location. When using a single combination of guiding means and associated change-over devices sorting is non-parallel, and the orientation of the product does indeed change during sorting, so that one side of the product is substantially parallel to the direction of extension of the guiding means.

The guiding means 32 that are provided on the frame comprise a stationary guiding member, connected to the frame 5, formed by an elongated guiding profile 38 that is substantially oblique relative to the conveying direction 4, for guiding the guide member 24 of a pusher member 20 in operation, during transport of the carriers 2 in the conveying direction 4, so as to move the pusher member 20 in the longitudinal direction of the associated carrier 2, or in the transverse direction 8, for the purpose of moving a product located on the carrying surface 10 sideways from the carrying surface 12 at a discharge location 14. The guiding means 32 also have a curve 40 at the downstream end of the guiding profile 38. By this means, at the end of the transverse movement of the pusher member 20, the pusher member 20 is gradually guided to an end position in the transverse direction, said end position being indicated in Fig. 1 by the dashed line with reference number 42, and located on a long side of the device as shown in Fig. 1. In Fig. 2, the pusher member 20 is shown at far left, drawn with a dashed line, in said end position 42. With the backward movement of the carriers 2 on the underside of the device, the pusher members 20 are, as far as necessary, moved by means of an aforementioned reset guiding member, if necessary from this end position 42 (the pusher member drawn with dashed lines at bottom left in Fig. 2 is located at this end position 42) back to a first transverse position (pusher member 20' at bottom right in Fig. 2). The first transverse position is indicated by the dashed line with reference number 44 in Fig. 1 and, as shown, is located on an opposite long side of the device, i.e. of the carrying surface 12. As stated above, the end position 42 is thus located on one long side of the device, and the first transverse position 44 on the other. The guide member 24 of each pusher member 20 has a guide wheel 46 that is rotatable about a rotation axis 47 extending perpendicular to the carrying surface 12. The guiding profile 38 is provided on the frame 5 in such a way that the guide wheel 46 is in contact with the guiding profile 38. As shown in Fig. 1, the guiding profiles 38 of the guiding means 32 provided for a discharge location 14 extend parallel to one another, at an angle of about 25 degrees relative to the conveying direction 4, and in the conveying direction at a distance apart of twice the pitch between successive carriers 2, for the purpose of the parallel sorting as described above.

The device further comprises a detecting device 70, for example such as comprising a vision system and/or one or more optical sensors such as a photocell and/or one or more acoustic sensors, configured for detecting the carrier(s) 2 that define the portion of the carrying surface 12 on which a product 10 is standing. The device 1 further comprises a control module 80, which is configured for switching the change-over member (explained in more detail below) of each of the change-over devices 34 independently between the passive and active state thereof, and which is further connected to the detecting device 70 and drive device 7, in order to operate said change-over member in relation to said detection by the detecting device 70, and for example in combination with information about the transport speed in conveying direction 4, with the control module 80 at the precise moment for changing the state thereof.

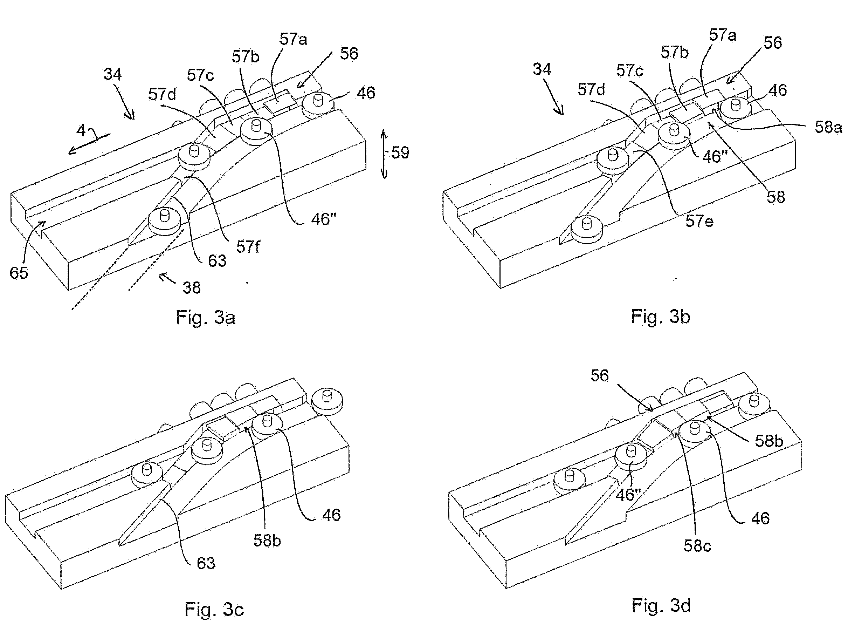

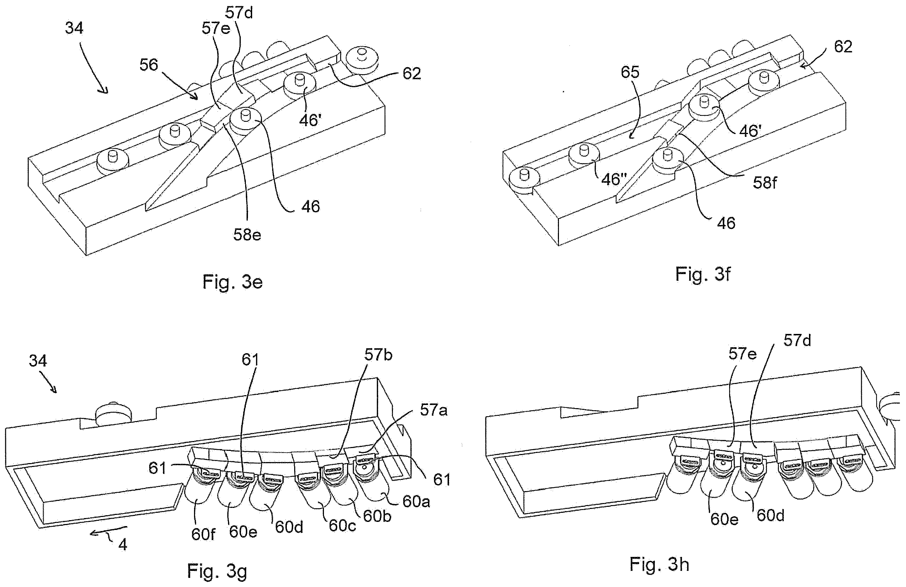

Each of the reversible change-over devices 34 is provided at an upstream end 39 of a guiding member 32 associated with said change-over device. Each of these change-over devices 34 comprises a change-over member 56 that is reversible between a passive and an active state thereof. It is arranged for allowing a pusher member 20 that is located in the first transverse position 44 to pass in the passive state along the upstream end 39 of the guiding profile 38. That is, the pusher member 20 thus remains in the first transverse position 44 and can be moved by a further, downstream change-over device towards guiding means associated with said further change-over device, thereby moving a product off the carrying surface. The change-over member 56 is further configured for moving a pusher member 20, in the active state, under the effect of contact between a contact surface 58 of the change-over member 56 and the guide member 24, more specifically the guide wheel 46 thereof, that is located on the first transverse position 44, in the longitudinal direction of the associated carrier 2, so that the guide wheel 46 is then guided by the guiding profile 38. Figs. 3a-3h, which are explained in more detail below, show very schematically, for the purpose of comprehending the principle of action of the change-over member 56, a guide wheel 46 of a pusher member 20 that is in contact with the contact surface 58 of the change-over member 56, i.e. rolls along it, and is then guided by the guiding profile 38.

Figs. 3a-3f show a change-over device 34 of device 1 during successive steps that are carried out in operation of the device 1 during sorting of a product 10. In Figs. 3a-3f, in each case one of the guide wheels shown is provided with the reference number 46. The successive steps of the change-over device are described below, as they are applicable to that specific guide wheel 46, which by way of example is intended to be deflected from the first transverse position towards the stationary guiding member.

As shown in Figs. 3a-3f, the change-over member 56 has six successive change-over elements 57a-57f, all configured substantially in block form, and defining a successive part of the contact surface 58, said contact surface 58 thus being formed by contact surface parts 58a-58f in combination. In the active state of the change-over member 56, the guide wheel 46 is successively in contact with the six change-over elements 57a-f, wherein in each case at least one of the change-over elements is in the active position thereof, which in the present example is a higher position of the respective change-over element. The change-over elements 57a-f are movable between an active and passive position thereof in a displacement direction 59 directed in the height direction. The change-over elements 57a-f are provided inclined slightly forwards in the change-over device. The displacement direction 59 then forms a small angle, such as between 5 and 10 degrees, with the vertical, at least with a line perpendicular to the carrying surface.

The change-over device 34 additionally has a displacing device in the form of six servomotors 60 operatively connected to the control module 80 and therefore drivable independently, one per change-over element, for driving each change-over element 57a-f via a respective cam follower 61 in linear translation in the height direction so as to be able to move, by means of said translation, independently in the height direction 59 of each of the six change-over elements 57a-f between the, lower, passive and the, higher, active position thereof. In the passive position, the change-over elements 57a-f are moved downwards so that they are outside the range of the guide wheel 46. As shown, the guide wheel 46 is then movable over the change-over elements 57a-f.

In the active position, the contact surface parts 58a-f of the change-over elements 57a-f are connected to each other so that the contact surface 58 formed thereby has a continuous course along the change-over elements. In the active state of the change-over member 56, at least one of the change-over elements 57a-f is in the active position thereof. In use, an upstream element of the six change-over elements 57a-f such as change-over element 57a in Fig. 3b, may already be in the higher, active position for guiding the guide wheel 46 along it, whereas a downstream change-over element of the six change-over elements, such as change-over elements 57c-f in Fig. 3b, may still be in the passive position thereof. Similarly, after the guide wheel 46 has passed the part of the contact surface 58a formed by the upstream change-over element 57a, this change-over element 57a can again be moved downwards to the passive position thereof whereas, for the purpose of guiding the guide wheel 46 along it towards the guiding profile 38, in each case at least one downstream change-over element is still held in the active position. In this context, see for example Figs. 3d and 3e, where change-over element 57a is or has been moved from the active position back to the passive position thereof, whereas change-over element 57d is in the active position, just like, at least in Fig. 3e, the change-over element 57e. As shown in Figs. 3e and 3f, a guide wheel 46' following the guide wheel 46 can pass the change-over member 56 and thus the upstream end 39 of the guiding means 32 unhindered (in the first position) whereas the same change-over member 56 is also still active for deflecting the guide wheel 46.

The change-over device 34 also has a longitudinal guide 62 for guiding the guide wheel 46 in the conveying direction 4, in the first transverse position 44, towards the change-over member 56. The change-over device 34 also has a further guide 63 which connects upstream to the most downstream change-over element 57f of the six change-over elements 57a-f of the change-over member, and which connects downstream to the stationary guiding profile 38 (the course thereof is shown with dotted lines in Fig. 3a). The longitudinal guide 62 and the further guide 63 have a rectilinear course, i.e. are not curved. Longitudinal guide 62, the change-over elements 57a-f, or more specifically the contact surface 58 formed thereby (with contact surface parts 58a-f), and the further guide 63 in combination have a continuous course. That is, a guide wheel 46 can be moved sideways by the change-over device 34 without a jump in the transverse acceleration, in the direction of the stationary guiding profile 38. The contact surface parts 58c and 58d are then more curved than the contact surface parts 58a and b or 58e and f located upstream and downstream thereof. The change-over device 34 is also provided with a further rectilinear longitudinal guide 65, which is in line with the longitudinal guide 62, so that guide wheels that are not deflected by means of the change-over member 56 towards the stationary guiding profile 38 remain at the first transverse position 44, i.e. pass from the longitudinal guide 62 over the change-over elements 57a-f and via the further longitudinal guide 65 along the upstream end of the guiding means 32, at the first transverse position. An example of this is the guide wheel 46" shown in Figs. 3a-f.

The guiding means 32 may further have a stationary longitudinal guiding member connected to the frame 5 in the form of a longitudinal guiding profile that extends at the first transverse position 44 parallel to the conveying direction 4, i.e. that is positioned for guiding guide wheels 46 of pusher members 20 at the first transverse position 44. The longitudinal guiding profile may extend downstream over the full length of the device 1. In each case the longitudinal guiding profile is then interrupted at the position of a change-over device 34 to make space for the change-over elements and longitudinal guide 62 of said change-over device 34.

In operation, products 10 are placed on the carrying surface 12 of the device 1 in such a way that a side of the products 10 which, on the side of the pusher members, which are located on the upstream end of the device in the first transverse position, is located in a transverse position such that pusher members 20 just, or not quite, come into contact with the product 10. Guiding pusher members 20 from the first transverse position 44 with the change-over member 56 transversely towards the guiding profile 38, proceeds without or at least with considerably less impact of the pusher shoes 22 on products to be moved, since the pusher shoe 22 is thus already at least almost in contact with a product 10.

According to the invention, for the purpose of moving a product 10 located on the carrying surface 12 from the stream of products, at a discharge location 14 sideways from off the carrying surface, up to a discharge device 102, with one of the change-over devices 34, in the active state of the change-over member 56 of said change-over device 34, said pusher member with which a product is to be moved with the respective change-over device 34 sideways off of the carrying surface, moves in the longitudinal direction of the associated carrier, so that the guide member of that pusher member 20 is then guided by the guiding member to move the pusher member in the longitudinal direction of the associated carrier and therefore move the product sideways from off the carrying surface. Finally the product in question is moved along further with the associated discharge device at this discharge location.

The present invention is also applicable to double-sided sorting devices, i.e. that are effective in two opposite directions, for example as known from US-A1-2007/289839. Change-over devices as described above are in that case located on both long sides of the device/of the carrying surface. Respective associated guiding means then extend, depending on the transverse position at which a change-over device is located, from the associated change-over device obliquely in the direction of the one long side or to the opposite other long side. It is also possible that change-over devices according to the invention as described above are located centrally in a transverse position. Products to be sorted may then be pushed with a pusher member from the middle of the device towards one or other long side. The device may in that case have change-over devices with mirror symmetry, of integral design as one component, or next to each other, or seen in the conveying direction, depending on the location of discharge devices, change-over devices that are active towards the one or other long side.

## Claims

1. Device (1) for sorting products (10), comprising
- a frame (5),
- successive elongated carriers (2) that form a carrying surface (12) for products (10),
- a drive device (7) for conveying the carriers (2) in a conveying direction (4) and along an endless conveying path (6), wherein a longitudinal direction of the carriers (2) extends transversely to the conveying direction (4), in a transverse direction (8),
- pusher members (20), each movable along a carrier (2), each of the pusher members (20) comprising a pusher shoe (22) on a first side of the carrier (2) located on the carrying surface (12), and a guide member (24) connected to the pusher shoe (22) on an opposite second side of the carrier (2),
- guiding means (32) that are provided on the frame (5), comprising a stationary guiding member (38) connected to the frame that runs substantially obliquely relative to the conveying direction (4), for guiding the guide member (24) of a pusher member (20) in operation, during transport of the carriers (2) in the conveying direction (4), so as to move the pusher member (20) in the longitudinal direction of the associated carrier (2), for the purpose of moving a product located on the carrying surface (10) sideways off of the carrying surface (12) at a discharge location (14),
- a reversible change-over device (34), which is provided on the frame (5) at an upstream end (39) of the guiding member (38) and comprising a change-over member (56) that is reversible between a passive and an active state thereof and is configured for allowing a pusher member (20) to pass in the passive state along the upstream end (39) of the guiding member (38) and for moving the pusher member (20) in the longitudinal direction of the associated carrier (2) in the active state, under the effect of contact between a contact surface (58) of the change-over member (56) and the guide member (24) of a pusher member (20), so that the guide member (24) is then guided by the guiding member (38),
wherein the change-over member (56) comprises at least three successive change-over elements (57a-57f), each defining a successive part of the contact surface (58), the guide member (24) being successively in contact with said change-over elements (57a-57f) in operation, at least in the active state of the change-over member (56), wherein the change-over device (34) also has a displacing device for moving each of the at least three change-over elements (57a-57f) between a passive and an active position thereof, wherein in the passive position the respective change-over element is outside the range of the guide member (24), and wherein in the active state of the change-over member (56) at least one of the at least three change-over elements (57a-57f) is in the active position thereof.

2. Device according to Claim 1, wherein the at least three change-over elements (57a-57f) are a number of change-over elements in the range from three to eight inclusive, preferably four, five or six.

3. Device according to Claim 1 or 2, wherein the guide member (24) of each pusher member (20) has a guide wheel (46) that is rotatable about a rotation axis (47), wherein each of the at least three change-over elements (57a-57f) is configured so that in operation, in the active position thereof, it can be in contact with the guide wheel (46).

4. Device according to one or more of the preceding claims, wherein the displacing device is configured to move each of the at least three change-over elements (57a-57f) of a change-over member (56), preferably linearly, in the height direction, between the active and the passive position thereof, preferably wherein the passive position is lower than the active position.

5. Device according to Claims 3 and 4, wherein the change-over device (34) is configured so that in operation in the passive position of the respective at least three change-over elements (57a-57f), the guide wheel (46) moves over the respective at least three change-over elements (57a-57f).

6. Device according to one or more of the preceding claims, wherein the displacing device is configured to move each of the at least three change-over elements (57a-57f) of a change-over member (56), independently of the rest of the at least three change-over elements (57a-57f), between the active and the passive position thereof.

7. Device according to one or more of the preceding claims, wherein each of the at least three change-over elements (57a-57f) is mounted movably in a displacement direction (59) in the change-over device (34), wherein the displacement direction (59) is in the height direction and makes an angle with the carrying surface (12) in the range from 70 to 90 degrees inclusive, preferably in the range from 80 to 85 degrees inclusive.

8. Device according to one or more of the preceding claims, wherein each of the change-over elements, viewed in a displacement direction (59) thereof, has a polygonal, preferably quadrangular, cross-section.

9. Device according to one or more of the preceding claims, wherein the displacing device has, per change-over element of the at least three change-over elements (57a-57f), an electric motor (60) with a drive shaft that is coupled via a cam follower (61) to the change-over element for moving the change-over element between the active and the passive position thereof under the effect of rotation of the drive shaft.

10. Device according to one or more of the preceding claims, wherein the successive carriers (2) are provided at a mutual pitch (p), wherein a length of the contact surface (58) of the change-over member (56), seen in conveying direction (4), is greater than the pitch, and/or wherein the device (1) comprises a number of said reversible change-over devices (34), in each case at an upstream end (39) of the stationary guiding member (38) of associated stationary guiding means (32), and in each case at a mutual distance in the conveying direction (4) of at least twice the pitch (p).

11. Device according to one or more of the preceding claims, wherein the contact surface (58) has a continuously curved form, preferably wherein at least two of the at least three change-over elements (57a-57f) have a mutually different curvature, in combination forming at least a part of the continuously curved form of the contact surface (58), preferably wherein a change-over element seen downstream in the conveying direction (4) is more curved than the adjacent change-over element located upstream thereof of the at least three change-over elements (57a-57f), more preferably wherein a further downstream change-over element seen in the conveying direction (4), of the at least three change-over elements (57a-57f) is less curved than said downstream change-over element.

12. System (100) for sorting products (10), comprising
- a device (1) according to one or more of Claims 1-11,
- a feeding device (101) for feeding a stream of products to be sorted (10) onto the carrying surface (12) of the device (1),
- a number of discharge devices (102) that connect to the device (1) at respective discharge locations (14),
the device (1) comprising, per discharge location (14), stationary guiding means (32) with an associated reversible change-over device (34),
wherein in operation, products (10) fed via the feeding device (101) onto the carrying surface (12) are each moved off of the carrying surface (12) at a discharge location (14), making use of the change-over device (34) associated with said discharge location (14).

13. Method for sorting products, making use of a device (1) according to one of the preceding Claims 1-11, the method comprising
a) feeding a stream of products to be sorted (10) onto the carrying surface (12) of the device (1) with a feeding device (101),
b) conveying the carriers (2) in the conveying direction (4) with the drive device (7) of the device (1),
c) for the purpose of moving a product of the stream of products (10) located on the carrying surface (12) at a discharge location (14) sideways off of the carrying surface (12), to a discharge device (102),
moving the pusher member (20) with the reversible change-over device (34), in the active state of the change-over member (56) thereof, under the effect of contact between a contact surface (58) of the change-over member (56) and the guide member (24) of the pusher member (20), in the longitudinal direction of the associated carrier (2), so that the guide member (24) is then guided by the stationary guiding member (38) and the pusher member (20) is moved in the longitudinal direction of the associated carrier (2) so that the product (10) is moved sideways off of the carrying surface (12),
d) discharging the product with the associated discharge device (102) at said discharge location (14).

14. Method according to Claim 13, wherein for the purpose of step c) with the reversible change-over device (34):
first the most upstream change-over element of the at least three change-over elements (57a-57f) of the change-over member (56) is brought into the active position thereof,
after which, successively, the at least two more downstream change-over elements of the at least three change-over elements (57a-57f) of the change-over member (56) are brought into the active position thereof.

15. Method according to Claim 13 or 14, wherein after the guide member (24) has passed a change-over element of the at least three change-over elements (57a-57f) of a change-over member (56), said change-over element is returned to or at least towards the passive position thereof before the guide member (24) has passed the most downstream change-over element of said three change-over elements (57a-57f),
unless the guide member (24) of the upstream adjacent pusher member (20) also has to be moved in the longitudinal direction of the associated carrier (2) of the pusher member (20), under the effect of contact between a contact surface (58) of the change-over member (56) and the guide member (24) of the pusher member (20).
